Europäisches Patentamt

European Patent Office

Office européen des brevets

(11) Publication number: **0 083 324**
**B1**

(12) **EUROPEAN PATENT SPECIFICATION**

(45) Date of publication of patent specification: **20.04.88**

(51) Int. Cl.⁴: **A 23 G 3/20**

(21) Application number: **82830311.5**

(22) Date of filing: **27.12.82**

(54) **Method and machine for manufacturing a confectionery product.**

(30) Priority: **30.12.81 IT 6871981**

(43) Date of publication of application:
**06.07.83 Bulletin 83/27**

(45) Publication of the grant of the patent:
**20.04.88 Bulletin 88/16**

(84) Designated Contracting States:
**BE DE FR GB IT LU NL**

(56) References cited:
**BE-A- 892 909**
**DE-C- 592 394**
**DE-C- 657 142**
**FR-A- 583 399**
**FR-A-1 125 648**
**FR-A-1 341 146**
**FR-A-2 069 955**
**FR-A-2 083 304**
**FR-A-2 360 262**
**GB-A- 758 613**
**US-A-1 809 383**

(73) Proprietor: **Ferrero S.p.A.**
**Piazzale Pietro Ferrero 1**
**I-12051 Alba (Cuneo) (IT)**

(72) Inventor: **Cillario, Lorenzo**
**Via F.lli Bandiera 3**
**I-12051 Alba (Cuneo) (IT)**

(74) Representative: **Bosotti, Luciano et al**
**c/o Jacobacci-Casetta & Perani S.p.A. Via Alfieri, 17**
**I-10121 Torino (IT)**

Courier Press, Leamington Spa, England.

## Description

The present invention relates to methods for the manufacture of a confectionery product according to the pre-characterising portion of Claim 1. Such a method is known, for instance, from FR—A—2 069 955 and FR—A—2 083 304.

Also, manufacturing of confectionery products including two complementary half-shells enclosing a filling is disclosed in several other patent documents such as US—A—1 809 383, FR—A—1 125 648 and BE—A—892 909, this latter document being by the same applicant of the present invention and having been published only after the priority date of the present application.

The inherent problem of the present invention is of allowing the rapid manufacture of a confectionery product comprising a spherical wafer shell enclosing a filling of, for example, a creamy paste or a creamy paste which covers a praline containing a liquid, while minimising the wastage of materials and the probability of making defective products.

This problem is solved by a method of manufacturing a confectionery product such as called for in Claim 1.

The present invention also provides a machine for manufacturing a confectionery product according to such a method, characterised in that it comprises:
— a conveyor line having a movable surface, a receiving end, and a delivery end;
— first and second half-moulds located in alternating sequence on the movable surface of the conveyor line, the conveyor line moving the first and second half-moulds along from the receiving end to the delivery end, said first and second half-moulds having cavities with spherical internal surfaces, the internal surfaces of the cavities of the second half-moulds further including an annular profiled portion which, in cross-section, converges towards the central axis of symmetry of the cavity to form a narrow mouth;
— a loading station located adjacent the receiving end of the conveyor line, where first hemispherical half-shells of wafer having external surfaces complementary to the internal surfaces of the cavities of the first half-moulds are placed in the cavities of the first half-moulds, and second hemispherical half-shells of wafer having external surfaces complementary to the internal surfaces of the cavities of the second half-moulds are forced into the cavities of the second half-moulds, while the first and the second half-moulds are supported by the movable surface with their cavities facing upwardly;
— a filling station located downstream of the loading station along the conveyor line, where the half-shells in the first and second half-moulds are filled with a metered quantity of filling which can adhere to the wafer;
— a joining station located downstream of the filling station along the conveyor line, where each second half-mould is turned over onto the adjacent first half-mould so as to bring each half-shell contained in a cavity of a second half-mould together edgewise with a respective half-shell contained in a cavity of the first half-mould and form a confectionery product comprising a spherical wafer shell constituted by two hemispherical half-shells stuck together by the contact between their respective fillings;
— a releasing station located downstream of the joining station along the conveyor line, the releasing station comprising a raising device which raises each second half-mould slightly relative to the underlying first half-mould, whereby the confectionery products are pulled up by the second half-mould due to the force-fit of the upper half-shells into the respective cavities of the second half-moulds, and an expulsion device which exerts a thrust on the outer surface of the upper half-shells so as to expel these half-shells from the cavities of the second half-moulds, whereby the confectionery products fall into the respective cavities of the first half-moulds;
— an uncoupling station located downstream of the releasing station along the conveyor line, where each second half-mould is turned over and brought back to the position adjacent the respective first half-mould, and
— an unloading station located adjacent the delivery end of the conveyor line where each confectioney product is removed from its cavity of the first half-mould.

By virtue of this characteristic, the machine according to the invention allows the rapid manufacture of confectionery products comprising a spherical wafer shell constituted by two hemispherical half-shells which enclose a filling, without requiring any handling of the products during manufacture.

The invention will now be described, purely by way of non-limiting example, with reference to the appended drawings, in which:

Figures 1 to 8 illustrate schematically an operating sequence of the process according to the invention;

Figure 9 is a schematic elevational view of a machine according to the invention;

Figures 10 and 11 are partially cut-away perspective views of parts shown in Figure 9, and

Figures 12 and 13 are partially cut-away sectioned elevational views illustrating details of Figures 11 and 12.

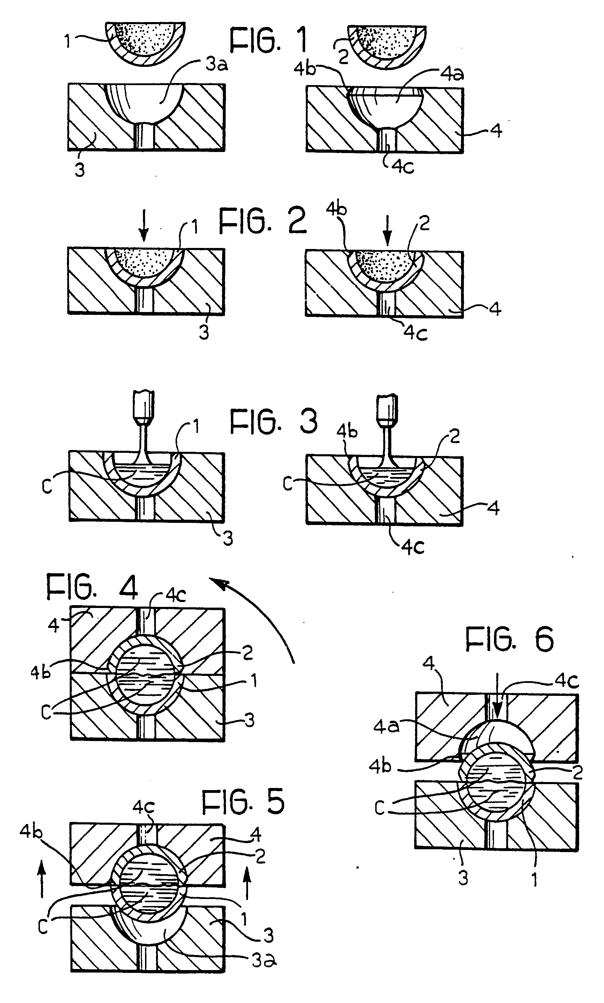

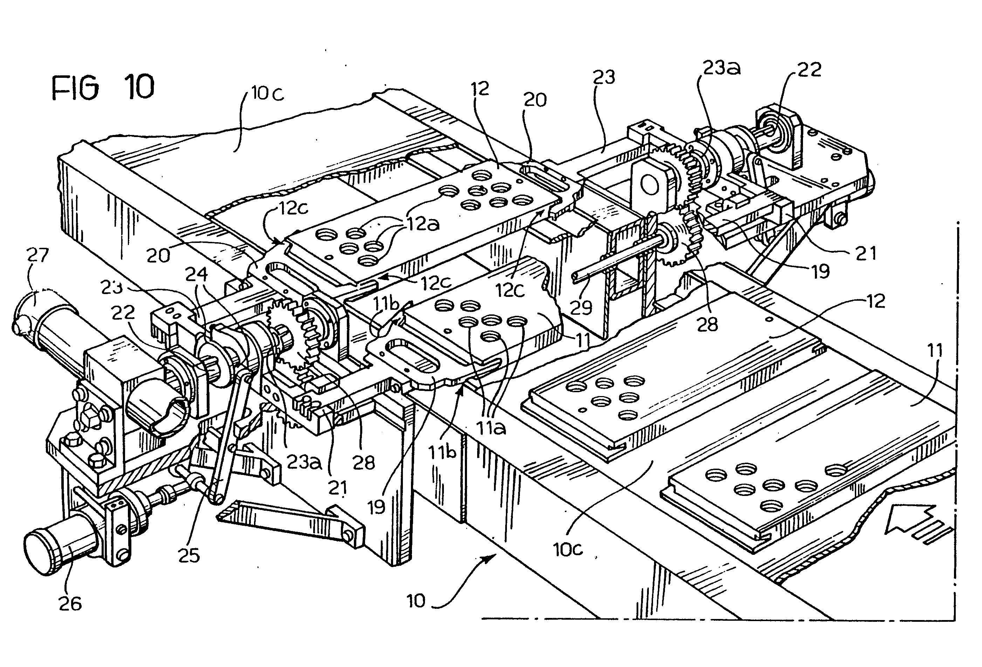

Figures 1 to 8 show two identical hemispherical wafer half-shells 1, 2 respectively.

First and second half-moulds 3, 4 respectively have respective hemispherical cavities 3a, 4a with profiles complementary to those of the outer surfaces of the half-shells 1, 2.

The second half-mould 4 has a profiled portion 4b adjacent the edge of the hemispherical cavity 4a which, in cross-section, converges towards the central axis of symmetry of the cavity 4a to form a narrow mouth.

The cavities 3a, 4a also have ducts, such as those shown 4c, in their polar parts, which make the outer surfaces of the half-shells 1, 2 accessible when these half-shells are in the cavities 3a, 4a.

The half-shells 1, 2 are intended to be filled with a filling C which can adhere to the wafer.

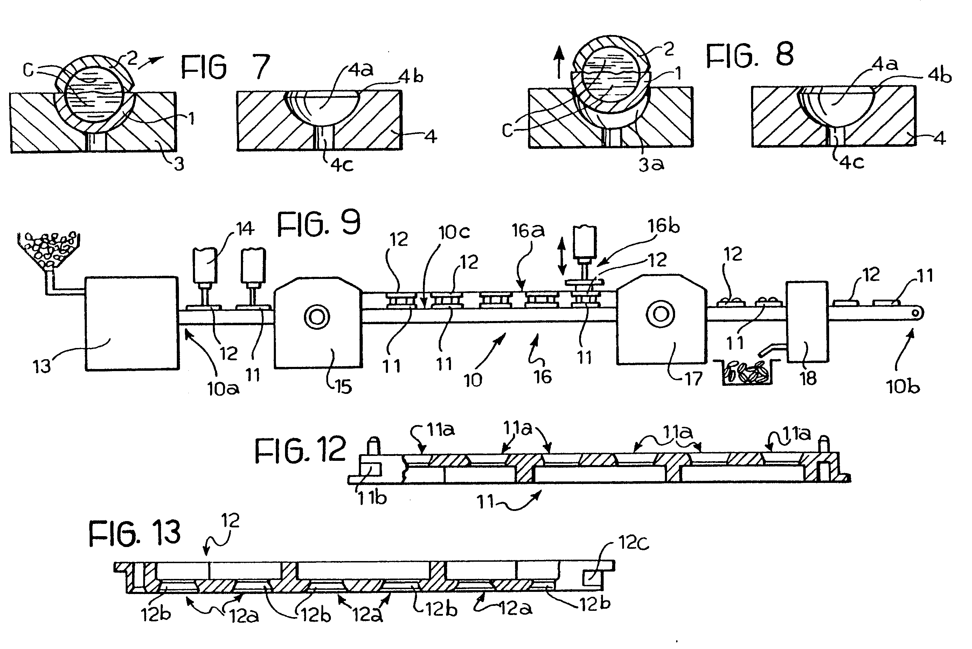

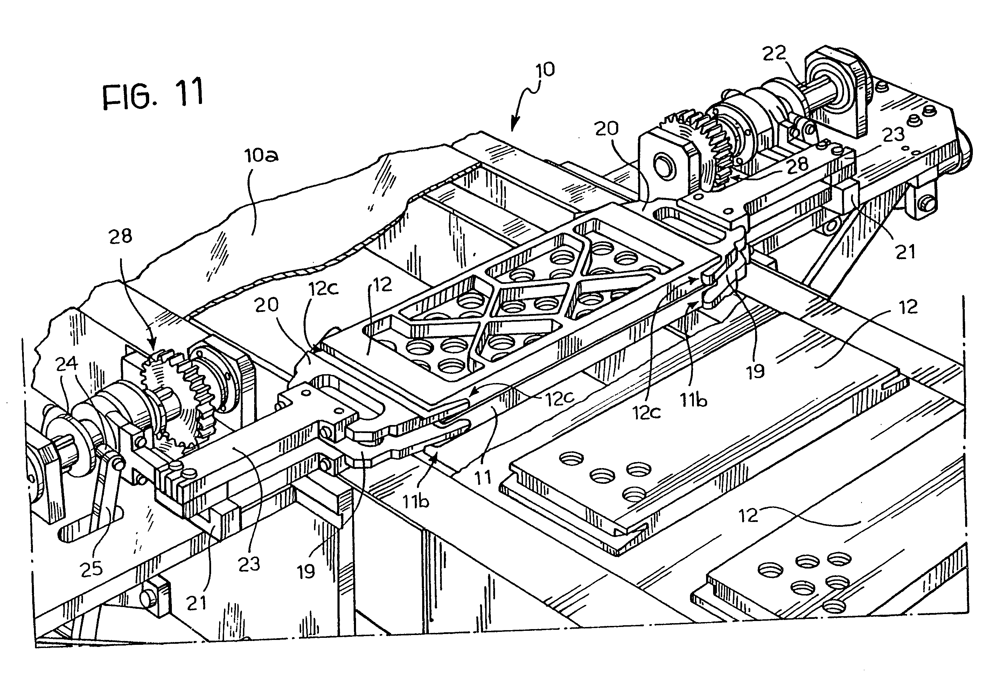

Figure 9 shows a conveyor line, generally indicated 10, having a receiving end 10a and a delivery end 10b, and comprising a surface 10c movable between the receiving end 10a and the delivery end 10b.

On the movable surface 10c are disposed, in alternating sequence, first and second half-moulds 11, 12 each of which has a plurality of cavities for receiving respective hemispherical half-shells of the same type as those indicated 1, 2 in Figures 1 to 8, with internal spherical surfaces complementary to the outer-surfaces of these half-shells.

The first and second half-moulds 11, 12 are constituted, as best seen in Figures 12 and 13, by plates having a thickness less than the radius of the half-shells. Each of the respective cavities 11a, 12a of the first half-mould 11 and the second half-mould 12 is constituted by an aperture formed in the plate of the respective half-mould 11, 12.

The lateral surfaces of the cavities 11a, 12a thus define a spherical segment having its centre in one of the faces of the plate.

The internal surfaces of the cavities 12a of the second half-moulds 12 further include annular zones 12b adjacent the surface of the plate in which lie the centres of the spherical segments.

The annular zone 12b has a profile which, in cross-section, converges towards the central axis of symmetry of the cavity 12a to form a narrow mouth.

Preferably, the annular zone 12b has a conical profile.

In Figure 9, a loading station 13 is situated adjacent the receiving end 10a of the conveyor line.

Downstream of the loading station 13, in the direction of movement of the first and second half-moulds 11, 12 on the movable surface 10c, a filling station 14 and a joining station 15 are located in succession.

Downstream of the joining station 15, along the conveyor line 10, is a releasing station, generally indicated 16, which includes a raising device 16a and an expulsion device 16b.

Downstream of the releasing station 16 is an uncoupling station 17, having, as will be better explained below, a structure corresponding substantially to that of the joining station 15.

Between the uncoupling station 17 and the delivery end 10b of the conveyor line 10 is an unloading station 18.

In Figures 10 and 11, which illustrate the structure of the joining station in detail, a first pair of forked gripping elements with two arms is indicated 19.

The gripping elements 19 are located opposite each other transverse the conveyor line 10 and are movable towards one another between a rest position and a position in which they engage and locate a first half-mould 11 between them.

A second pair of two-armed forked gripping elements 20 are also opposite each other transversely of the conveyor line 10 and are movable towards one another between a rest position and a position in which they engage and locate a second half-mould 12 between them.

In order to make the engagement of the first and second half-moulds 11, 12 by the gripping elements 19, 20 more precise and firmer, each first and second half-mould 11, 12 is in the form of a rectangular plate with grooves 11b, 12c (also shown in Figures 12 and 13) in the lateral surfaces at each corner, the bottom of the grooves being constituted by inclined surfaces intended to be engaged by respective arms of a forked gripping element 19, 20.

The inclined surfaces of the grooves 11b, 12c formed in each pair of corners of the plate facing a forked gripping element 19, 20 converge towards the forked elements 19, 20 so as to be engageable thereby.

Each of the forked gripping elements 19 is carried by a free end of an L-shaped arm 21 the opposite end of which is ring-shaped and is fitted onto a shaft 22 supported by a support framework which is fixed to the conveyor line 10 in a position substantially coplanar with the movable surface 10c and is oriented transverse the conveyor line 10. The ring-shaped end of the arm 21 is freely rotatable and axially slidable on the shaft 22.

In an essentially similar manner, each forked gripping element 20 is carried by a free end of an L-shaped arm 23 the opposite end of which is ring-shaped, is fitted and axially slidable on the shaft 22, and has a sleeve 22a which extends into the aperture of the ring-shaped end of the arm 21 to render the arms 21, 23 rigid for axial sliding movement relative to the shaft 22. The ring-shaped end also has an annular groove within which two thrust blocks 24 are slidable, each block being mounted at a free end of a lever 25 pivoted on the support framework for the shafts 22 and driven by a linear actuator 26 having a rod which is movable transverse the conveyor line 10.

The arrangement is such that the operation of the actuators 26 on oposite sides of the conveyor line 10 effects the orientation of the levers 25 about their pivot points and a corresponding translation movement of the ring-shaped ends of the L-shaped arms 23 along the shafts 22.

This translational movement corresponds to the displacement of the formed gripping elements 20 between their rest position and the position of gripping the second half-mould 12 or vice versa.

This translational movement also corresponds to an axial translational movement of the ring-shaped ends of the L-shaped arms 21 along the shafts 22 and the displacement of the formed gripping elements 19 from the rest position to the position of engaging the half-mould 11 or vice versa.

One of the shafts 22 is rotatable by a drive device 27 which is constituted, in the embodiment illustrated, by a double-acting linear actuator. The rotation of the shaft 22 connected to the drive device 27 is transmitted to the shaft 22 located on the opposite side of the conveyor line 10 through pairs of gears 28 and a shaft 29 lying beneath the movable surface 10c.

The ring-shaped end of each L-shaped arm 23 is rendered torsionally rigid with the shaft 22 on which it is fitted by means of an interposed key.

The rotation of the shafts 22 about their axes thus causes a corresponding rotation of the arms 23 and the gripping elements 20 carried thereby between respective end positions in which the second half-mould 12 is adjacent the first half-mould 11 on the movable surface 10c (Figure 10); and the second half-mould 12 is superimposed on the first half-mould 11 (Figure 11).

In operation of the machine according to the invention, the hemispherical wafer half-shells are placed in the cavities of the half-moulds at the loading station 13, as illustrated schematically in Figure 2. In particular, some of the half-shells are placed in the cavities 11a of the first half-moulds 11, while other half-shells are forced into the cavities 12a of the second half-moulds 12 where they are retained due to the presence of the annular zones 12b.

During the loading of the half-shells, the first and second half-moulds 11, 12 are supported by the movable conveyor surface 10c so that their cavities 11a, 12a face upwardly.

At the outlet of the loading station 13 the half-shells in the first and second half-moulds 11, 12 are filled with a metered quantity of filling C at the filling station 14, as illustrated schematically in Figure 3.

After filling, the filled half-shells are moved to the joining station 15. At this station 15, according to the sequence illustrated in Figures 10 and 11, the arms 21, 23 are moved axially by the linear actuators 26 so that the forked gripping elements 19, 20 engage and locate between them the first half-mould 11 and the second half-mould 12, and the arms 23 are then rotated by the drive device 27 to overturn the second half-mould 12 onto the first half-mould 11.

As a result of this overturning, as illustrated schematically in Figure 4, each half-shell contained in a cavity 12a of a second half-mold 12 is brought together edgewise with a respective half-shell contained in a cavity 11a of a first half-mould 11.

A confectionery product is thus formed which comprises a spherical wafer shell constituted by the two hemispherical half-shells stuck together by the contact between their respective fillings.

After the arms 21, 23 have been moved away and the forked gripping elements 19, 20 have been disengaged from the grooves 11b, 12c by means of the actuators 26, the joined half-moulds 11, 12 containing the formed products are transferred to the releasing station 16.

At this station 16, the raising device 16a raises each second half-mould 12 slightly relative to the first half-mould 11. As a result of the force-fit of the upper half-shell in its cavity 12a of the second half-mould 12, each confectionery product is pulled upwardly by this raising movement, as illustrated schematically in Figure 5.

The expulsion device 16b, which may be constituted, for example, by a comb with a plurality of expulsion pins, exerts a thrust on the outer surface of the half-shells contained in the cavities 12a, expelling the half-shells from the second half-mould 12, as illustrated schematically in Figure 6. The confectionery products thus fall into the cavities 11a of the first half-mould 11.

At the uncoupling station 17, which has a structure substantially similar to that of the joining station 15, the superimposed first and second half-moulds 11, 12 are engaged by respective pairs of forked gripping elements 19, 20 carried by arms 21, 23 movable towards one another transverse the conveyor line 10.

As a result of the rotation of the L-shaped arms 23, each second half-mould 12 is turned over and brought back to its position adjacent to the respective first half-mould 11, according to the sequence inferable from looking successively at Figure 11 and Figure 10.

This sequence is also illustrated schematically in Figure 7.

At the unloading station 18 downstream of the uncoupling station 7, the confectionery products contained in the cavities 11a are removed from the first half-mould 11, as illustrated schematically in Figure 8, and sent to any subsequent working stages.

Naturally, the principle of the invention remaining the same, the steps of the process, the details of realisation and the forms of embodiment may be varied widely with respect to that described and illustrated without thereby departing from the scope of the present invention.

**Claims**

1. Method of manufacturing a confectionery product including a first (1) and a second (2) hemispherical half-shell enclosing a filling (C), wherein a first (3) and a second (4) half-mould each having a hemispherical cavity (3a, 4a) are provided for receiving said first (1) and second (2) half-shells, respectively, and at least one of said half-shells (1, 2) is filled with said filling (C) and the second half-shell (2) is then superposed in frontal mating relationship onto said first half-shell (1) so as to form said confectionery product, and a downward force is then exerted on the outer surface of the second half-shell (2) so as to expel the second half-shell (2) from the cavity (4a) of the second half-mould (4), characterised in that it includes the steps of:
— selecting said first (1) and second (2) half-shells of a wafer material and said filling (C) of a self-adhering material which can adhere to the wafer material,
— providing a second half-mould (4) adjacent the first half-mould (3), which has a profiled portion (4b) adjacent its edge which, in cross-section, converges towards the central axis of symmetry of the hemispherical cavity (4a) to form a narrow mouth;

— forcing said second hemispherical half-shell (2) of wafer into the cavity (4a) of the second half-mould (4);

— filling the half-shell (1, 2) in each half-mould (3, 4) with said filling (C);

— turning the second half-mould (4) over onto the first half-mould (3) to form a confectionery product comprising a spherical wafer shell constituted by the two hemispherical half-shells (1, 2) stuck together by the contact between their respective fillings;

— raising the second half-mould (4) slightly relative to the first half-mould (3), this raising pulling up the confectionery product due to the force-fit of the second wafer half-shell (2) in the cavity (4a of the second half-mould (4), whereby said downward force exerted on the outer surface of the second half-shell (2) so as to expel the second half-shell (2) from the cvity (4a) of the second half mould (4) allows the confectionery product to fall into the cavity (3a) of the first half-mould (3);

— turning the second half-mould (4) over to bring it back to the position adjacent the first half-mould (3), and

— removing the confectionery product from the first half-mould (3).

2. Method according to Claim 1, characterised in that the second half-mould (4) has an aperture (4c) in the bottom of its hemispherical cavity (4a) and the downward thrust is exerted through the aperture (4c).

3. Machine for manufacturing a confectionery product according to the method of Claim 1 or 2, characterised in that it comprises:

— a conveyor line (10) having a movable surface (10c), a receiving end (10a), and a delivery end (10b);

— first and second half-moulds (11, 12) located in alternating sequence on the movable surface (10c) of the conveyor line (10), the conveyor line (10) moving the first and second half-moulds (11, 12) along from the receiving end (10a) to the delivery end (10b), the first and second half-moulds (11, 12) having cavities (11a, 12a) with spherical internal surfaces, the internal surfaces of the cavities (12a) of the second half-moulds (12) further including an annular profiled portion (12b) which, in cross-section, converges towards the central axis of symmetry of the cavity to form a narrow mouth;

— a loading station (13) located adjacent the receiving end (10a) of the conveyor line (10), where first hemispherical half-shells of wafer having outer surfaces complementary to the internal surfaces of the cavities (11a) of the first half-moulds (11) are placed in the cavities (11a) of the first half-moulds (11) and second hemispherical half-shells of wafer having external surfaces complementary to the internal surfaces of the cavities (12a) of the second half-moulds (12) are forced into the cavities (12a) of the second half-moulds (12), while the first and second half

moulds (11, 12) are supported by the movable surface (10c) with their cavities (11a, 12a), facing upwardly;

— a filling station (14) located downstream of the loading station (13) along the conveyor line (10), where the half-shells in the first and second half-moulds (11, 12) are filled with a metered quantity of filling (C) which can adhere to the wafer;

— a joining station (15) located downstream of the filling station (14) along the conveyor line (10), where each second half-mould (12) is turned over onto the adjacent first half-mould (11) so as to bring each half-shell contained in a cavity (12a) of a second half-mould (12) together edgewise with a respective half-shell contained in a cavity (11a) of the first half-mould (11) and form a confectionery product comprising a spherical wafer shell constituted by two hemispherical half-shells stuck together by the contact between their respective fillings;

— a releasing station (16) located downstream of the joining station (15) along the conveyor line (10), the releasing station (16) comprising a raising device (16a) wich raises each second half-mould (12) slightly relative to the underlying first half-mould (11), whereby the confectionery products are pulled up by the second half-moulds (12) due to the force-fit of the upper half-shells in the respective cavities (12a) of the second half-moulds (12), and an expulsion device (16b) which exerts a thrust on the outer surface of the upper half-shells so as to expel these half-shells from the cavities (12a) of the second half-moulds (12), whereby the confectionery products fall into the respective cavities (11a) of the first half-moulds (11);

— an uncoupling station (17) located downstream of the releasing station (16) along the conveyor line (10), where each second half-mould (12) is turned over and brought back to the position adjacent the respective first half-mould (11), and

— an unloading station (18) interposed between the uncoupling station (17) and the delivery end (10b) of the conveyor line (10), where the confectionery product is removed from its cavity (11a) of the first half-mould (11).

4. Machine according to Claim 3, characterised in that the first and second half-moulds (11, 12) are each constituted by a plate having a thickness less than the radius of the half-shells, and in that each of the cavities (11a, 12a) is constituted by an aperture formed in a said plate and having a lateral surface which defines a spherical segment with its centre in the face of the plate which faces upwardly when the two half-moulds (11, 12) are adjacent each other, the internal surfaces of the cavities (12a) of the second half-moulds (12) further including annular zones (12b) adjacent the surface of the plate in which lies the centre of the spherical segment and having, in cross-section, a profile which converges towards the central axis of symmetry of the spherical segment to form a narrow mouth.

5. Machine according to Claim 4, characterised in that the annular zone (12b) has a conical profile.

6. Machine according to any one of claims 3 to 5, characterized in that it comprises:
— a first pair of forked gripping elements (19) with two arms, located opposite each other transversely of the conveyor line (10);
— means (21, 25, 26) for moving the gripping elements (19) axially towards one another from a rest position to a position in which they engage and locate the first half-mould (11) of a pair of half-moulds located at the joining station (15);
— a second pair of forked gripping elements (20) with two arms, located opposite each other transversely of the conveyor line (10);
— means (23, 25, 26) for moving the gripping elements axially towards one another from a rest position to a position in which they engage and locate the second half-mould (12) of the said pair of half-moulds, and
— means (22, 23, 27, 28, 29) for rotating the forked gripping elements (23) of the second pair, with the second half-mould (12) engaged between them, about an axis lying between the two pairs of forked gripping elements (19, 20), to bring the second half-mould (12) into a position in which it is turned over onto the first half-mould (11).

7. Machine according to Claim 6, characterised in that each first half-mould (11) and each second half-mould (12) is in the form of a rectangular plate having a groove (11*b*, 12*c*) in its lateral surface at each corner, the bottom of each groove being constituted by an inclined surface, the inclined surfaces of the grooves (11*b*, 12*c*) of each pair of corners of the plate facing a forked gripping element (19, 20) converging towards a respective forked element (19, 20) and being engageable by the two arms of this element (19, 20) to effect the correct positioning of the half-mould (11, 12) in the position of engagement of the respective pairs of gripping elements (19, 20).

**Patentansprüche**

1. Verfahren zum Herstellen von Süßwaren mit einer ersten (1) und einer zweiten (2) halbkugeligen Halbschale mit einer füllung (C), wobei eine erste (3) und eine zweite (4) Halbform jeweils einen halbkugeligen Hohlraum (3a, 4a) haben und für das Aufnehmen der ersten (1) bzw. der zweiten (2) Halbschale vorgesehen sind, und zumindest eine der Halbschalen (1, 2) mit der Füllung (C) gefüllt wird und dann die zweite Halbschale (2) in frontaler Zuordnung auf die erste Halbschale (1) gelegt wird, um so eine Süßware zu bilden, wonach eine nach unten gerichtete Kraft auf die Außenfläche der zweiten Halbschale (2) ausgeübt wird, um die zweite Halbschale (2) aus dem Hohlraum (4a) der zweiten Halbform (4) auszustoßen, dadurch gekennzeichnet, daß das Verfahren folgende Verfahrensschritte umfaßt:
— Auswählen der ersten (1) und der zweiten (2) Halbschale aus einem Waffelmaterial und der Füllung (C) aus einem selbsthaftenden Material, welches am Waffelmaterial haften kann,
— Vorsehen einer zweiten Halbform (4) neben der ersten Halbform (3), die in der Nähe des Randes einen profilierten Abschnitt (4b) aufweist, der, im Querschnitt gesehen, in Richtung auf die Mittelachse der Symmetrie des halbkugeligen Hohlraumes (4a) konvergiert, um einen engen Mund zu bilden;
— Drücken der zweiten halbkugeligen Halbschale (2) der Waffel in den Hohlraum (4a) der zweiten Halbform (4);
— Füllen der Halbschale (1, 2) in jeder Halbform (3, 4) mit der Füllung (C);
— Wenden der zweiten Halbform (4) auf die erste Halbform (3) zum Ausbilden einer Süßware mit einer kugeligen Waffelschale, gebildet von zwei halbkugeligen Halbschalen (1, 2), die durch die Berührung zwischen den jeweiligen Füllungen miteinander verklebt sind;
— leichtes Anheben der zweiten Halbform (4) relativ zur ersten Halbform (3), wodurch die Süßware aufgrund des Kraftsatzes der zweiten Waffelhalbschale (2) im hohlraum (4a) der zweiten Halbform (4) hochgezogen wird, wodurch die nach unten gerichtete Kraft auf die Außenfläche der zweiten Halbschale (2) ausgeübt wird, um so die zweite Halbschale (2) aus dem Hohlraum (4a) der zweiten Halbform (4) auszustoßen, damit die Süßware in den Hohlraum (3a) der ersten Halbform (3) fallen kann;
— Wenden der zweiten Halbform (4), um diese zurück in die Position neben der ersten Halbform (3) zu bringen und
— Entfernen der Süßware aus der ersten Halbform (3).

2. Verfahren nach Anspruch 1, dadurch gekennzeichnet, daß die zweite Halbform (4) im Boden des halbkugeligen Hohlraumes (4a) eine Öffnung (4c) aufweist und daß die nach unten gerichtete Kraft durch diese Öffnung (4c) ausgeübt wird.

3. Maschine zum Herstellen einer Süßware nach dem Verfahren des Anspruchs 1 oder 2, dadurch gekennzeichnet, daß sie umfaßt:
— eine Förderlinie (10) mit einer beweglichen Fläche (10c), einem Aufnahmeende (10a) und einem Abgabeende (10b);
— erste und zweite Halbformen (11, 12), die in abwechselnder Folge auf der beweglichen Fläche (10c) der Förderlinie (10) angeordnet sind, wobei die Förderlinie (10) die erste und zweite Halbform (11, 12) vom aufnahmeende (10a) zum Abgabeende (10b) entlangbewegt, wobei die ersten und zweiten Halbformen (11, 12) Hohlräume (11a, 12a) mit kugeligen Innenflächen haben, von denen die Innenflächen der Hohlräume (12a) der zweiten Halbformen (12) weiterhin einen ringförmig profilierten Abschnitt (12b) umfassen, der, im Querschnitt gesehen, in Richtung auf die Mittelachse der Symmetrie des Hohlraumes Konvergiert, um einen engen Mung zu bilden;
— eine Ladestation (13), die neben dem Aufnahmeende (10a) der Förderlinie (10) angeordnet ist, wo die halbkugeligen Halbschalen einer Waffel mit Außenfläche, die zu den Innenflächen der Hohlräume (11a) der ersten Halbformen (11) komplementär sind, in die Hohlräume (11a) der ersten Halbschale (11) gelegt werden, und die zweiten halbkugeligen Halbschalten der Waffel mit Außen-flächen, die den Innenflächen der Hohlräume (12a) der zweiten Halbformen (12) komplementär sind, in die Hohlräume (12a) der zweiten Halbformen (12) gedrückt werden, während die ersten und zweiten Halbformen (11, 12) von einer beweglichen Fläche (10c) so abgestützt werden, daß deren Hohlräume (11a, 12a) nach oben gerichtet sind;

— eine Füllstation (14), die stromab der Ladestation (13) entlang der Förderlinie (10) aqngeordnet ist, wo die Halbschalen in den ersten und zweiten Halbformen (11, 12) mit einer abgemessenen Menge einer Füllung (C) gefüllt werden, die an der Waffel haften kann;

— eine Verbindungsstation (15), die stromab der Füllstation (14) entlang der Förderlinie (10) angeordnet ist, wo jede zweite Halbform (12) auf die benachbarte erste Halbform (11) gewendet wird, um so jede Halbschale in einen Hohlraum (12a) einer zweiten Halbform (12) randweise mit einer jeweiligen Halbschale in einem Hohlraum (11a) der ersten Halbform (11) zusammenzubringen und so eine Süßware zu bilden, die eine Kugelige Waffelschale umfaßt, die von zwei halbkugeligen Halbschalen gebildet wird, die durch die Berührung der darin befindlichen Füllungen zusammengeklebt sind;

— eine Lösestation (16), die stromab der Verbindungsstation (15) entland der Förderlinie (10) angeordnet ist und eine Hebevorrichtung (16a) umfaßt, die jede zweite Halbform (12) relativ zur darunterliegenden ersten Halbform (11) geringfügig anhebt, wodurch die Süßware durch die zweite Halbform (12) aufgrund des Kraftsitzes der oberen Halbschalen in den jeweiligen Hohlräumen (12a) der zweiten Halbformen (12) hochgezogen wird, und einer Ausstoßvorrichtung (16b) umfaßt, die eine Kraft auf die Außenfläche der oberen Halbschalen ausübt, um so diese Halbschalen aus den Hohlräumen (12a) der zweiten Halbformen (12) auszustoßen, wodurch die Süßware in die jeweiligen Hohlräume (11a) der ersten Halbformen (11) fallen kann;

— eine Entkupplungsstation (17), die stromab der Lösestation (16) entlang der Förderlinie (10) angeordnet, ist, wo jede zweite Halbform (12) gewendet und in die Position neben der jeweiligen ersten Halbform (11) zurückgebracht wird, und

— eine Entladestation (18), die zwischen der Entkupplungsstation (17) und dem Abgabeende (10b) der Förderlinie (10) angeordnet ist, wo die Süware vom Hohlraum (11a) der ersten Halbform (11) entfernt wird.

4. Maschine nach Anspurch 3, dadurch gekennzeichnet, daß die erste und zweite Halbform (11, 12) jeweils von einer Platte gebildet wird, deren Dicke geringer ist als der Radius der Halbschalen, und daß jeder Hohlraum (11a, 12a) von einer Öffnung gebildet wird, die in einer solchen Platte ausgebildet ist und eine seitliche Fläche aufweist, die ein kugeliges Segment definiert, dessen Zentrum an der Seite der Platte sich befindet, die nach oben weist, wenn die beiden halbformen (11, 12) nebeneinander angeordnet sind, daß die Innenflächen der Hohlräume (12a) der zweiten Halbformen (12) weiterhin ringzonen (12b) umfassen, die neben der Oberfläche der Platte liegen, in der das Zentrum des kugeligen Segmentes liegt, wobei diese Ringzonen, im Querschnitt gesehen, ein Profil haben, das in Richtung auf die Mittelachse der Symmetrie des kugeligen Segmentes Konvergiert, um einen engen Mund zu bilden.

5. Maschine nach Anspruch 4, dadurch gekennzeichnet, daß die Ringzone (12b) ein Konisches Profil hat.

6. Maschine nach einem der Ansprüche 3 bis 5, dadurch gekennzeichnet, daß sie umfaßt:

— ein erstes Paar von gegabelten Greifelementen (19) mit zwei Armen, die entgegengesetzt zueinander quer zur Förderlinie (10) angeordnet sind;

— Mittel (21, 25, 26) zum Bewegen der Greifelemente (19) axial zueinander aus einer Ruheposition in eine Position, in der sie die erste Halbform (11) eines Paares von Halbformen eingreifen und in die Verbindungsstation (15) bringen;

— eine zweiten Paar von gegabelten Greifelementen (20) mit zwei Armen, die entgegengesetzt zueinander quer zur Förderlinie (10) angeordnet sind;

— Mittel (23, 25, 26) zum Bewegen der Greifelemente axial aufeinander zu aus einer Ruheposition in eine Position, in der sie die zweite Halbform (12) des Paares von Halbformen ergreift und lokalisiert, und

— Mittel (22, 23, 27, 28, 29) zum Drehen der gegabelten Greifelemente (23) des zweiten Paares mit der dazwischen gegriffenen zweiten Halbform um eine Achse, die zwischen den beiden Paaren der gegabelten Greifelemente (19, 20) liegt, um so die zweite Halbform (12) in eine Position zu bringen, in der sie auf die erste Halbform (11) gewendet ist.

7. Maschine nach Anspruch 6, dadurch gekennzeichnet, daß jede erste Halbform (11) und jede Zweite Halbform (12) die Form einer rechtwinkligen Platte hat, in deren Seitenfläche an jeder Ecke eine Nut (11b, 12c) angeordnet ist, wobei der Boden jeder Nut von einer geneigten Fläche gebildet wird, welche geneigten Flächen jedes Paares von Ecken der Platte, die auf ein gegabeltes Greifelement (19, 20) gerichtet sind, in Richtung auf das jeweilige gegabelte Element (19, 20) konvergieren und mit den beiden Armen dieses Elementes (19, 20) in Eingriff bringbar ist, um das richtige Positionieren der Halbform (11, 12) in der Eingriffslage der jeweiligen Paare von Greifelementen (19, 20) zu bewirken.

**Revendications**

1. Procédé de fabrication d'un produit de confiserie, comprenant une première (1) et une deuxième (2) demi-coque hémisphérique entourant un fourrage (C), où un premier (3) et un deuxième (4) demi-moules, ayant chacun une cavité hémisphérique (3a, 4a), sont prévus pour recevoir respectivement ladite première (1) et ladite deuxième (2) demi-coques, et où au moins l'une desdites demi-coques (1, 2) est remplie dudit fourrage (C), et la deuxième demi-coque (2) est ensuite disposée, selon une relation d'ajustement frontale, au-dessus de ladite première demi-coque (1) de façon à former ledit produit de confiserie, puis une force dirigée vers le bas est exercée sur la surface extérieure de la deuxième demi-coque (2) de façon à expulser la deuxième demi-coque (2) de la cavité (4a) du deuxième demi-moule (4), caractérisé en ce qu'il comprend les étapes consistant:

— à sélectionner ladite première (1) et ladite deuxième (2) demi-coques en un matériau de gaufrette et ledit fourrage (C) en un matériau auto-adhésif pouvant adhérer au matériau de gaufrette,

— à prévoir un deuxième demi-moule (4) contigu au premier demi-moule (3) qui possède une portion profilée (4b), contiguë à son bord et qui, en section transversale, converge vers l'axe central de symétrie de la cavité hémisphérique (4a) pour former une embouchure réduite;

— à faire pénétrer à force ladite deuxième demi-coque hémisphérique (2) de gaufrette dans la cavité (4a) du deuxième demi-moule (4);

— à remplir dudit fourrage (C) la demi-coque (1, 2) se trouvant dans chaque demi-moule (3, 4);

— à retourner le deuxième demi-moule (4) sur le premier demi-moule (3) pour former un produit de confiserie comprenant une coque sphérique en gaufrette constituée des deux demicoques hémisphériques (1, 2), collées a l'une à l'autre par le contact entre leurs fourrages respectifs;

— à élever légèrement le deuxième demi-moule (4) par rapport au premier demi-moule (3), cette élévation tirant vers le haut le produit de confiserie en raison de l'assemblage à force de la deuxième demi-coque de gaufrette (2) dans la cavité (4a) du deuxième demi-moule (4), ladite force dirigée de haut en bas, exercée sur la surface extéreure de la deuxième demi-coque (2) de façon à éjecter la deuxième demi-coque (2) de la cavité (4a) du deuxième demi-moule (4), permettant au produit de confiserie de tomber dans la cavité (3a) du premier demi-moule (3);

— à retourner le deuxième demi-moule (4) pour le ramener à sa position contiguë au premier demi-moule (3), et

— à enlever du premier demi-moule (3) le produit de confiserie.

2. Procédé selon la revendication 1, caractérisé en ce que le deuxième demi-moule (4) possède une ouverture (4c) au fond de sa cavité hémisphérique (4a), la force dirigée vers le bas étant exercée à travers l'ouverture (4c).

3. Machine pour la fabrication d'un produit de confiserie selon le procédé des revendications 1 ou 2, caractérisée en ce qu'elle comprend:

— une ligne de fabrication (10) possédant une surface mobile (10c) une extrémité réception (10a) et une extrémité sortie (10b);

— des premiers et des deuxièmes demi-moules (11, 12), situés en séquence alternée sur la surface mobile (10c) de la ligne de fabrication (10), la ligne de fabrication (10) déplaçant les premiers et les deuxièmes demi-moules (11, 12) de l'extrémité réception (10a) à l'extrémité sortie (10b), les premiers et les deuxièmes demi-moules (11, 12) possédant des cavités (11a, 12a) ayant des surfaces internes sphériques, les surfaces internes des cavités (12a) des deuxièmes demi-moules (12) comprenant en outre une portion profilée annulaire (12b) qui, en section transversale, converge vers l'axe central de symétrie de la cavite pour former une embouchure étroite;

— une station de chargement (13), située au voisinage immédiat de l'extrémité réception (10a) de la ligne de fabrication (10), où les premières demi-coques hémisphériques en gaufrette, ayant des surfaces extérieures complémentaires des surfaces internes des cavités (11a) des premiers demi-moules (11) sont placées dans les cavités (11a) des premiers demi-moules (11), et les deuxièmes demi-coques hémisphériques en gaufrette, ayant des surfaces externes complémentaires des surfaces internes des cavités (12a) des deuxièmes demi-moules (12), sont introduites à force dans les cavités (12a) des deuxièmes demi-moules (12), les premiers et les deuxièmes demi-moules (11, 12) étant supportés par la surface mobile (10c) leurs cavités (11a, 12a) étant dirigées vers le haut;

— une station de remplissage (14), située en aval de la station de remplissage (13) le long de la ligne de fabrication (10), où les demi-coques se trouvant dans les premiers et les deuxièmes demi-moules (11, 12) sont remplies d'une quantité dosée de fourrage (C), qui peut adhérer à la gaufrette;

— une station d'assemblage (15), située en aval de la station de remplissage (14) le long de la ligne de fabrication (10), où chaque deuxième demi-moule (12) est retourné sur le premier demi-moule (11) qui lui est contigu, de façon à réunir, bord sur bord, chaque demi-coque contenue dans une cavité (12a) d'un deuxième demi-moule (12) avec une demi-coque correspondante contenue dans une cavité (11a) du premier demi-moule (11), et former un produit de confiserie comprenant une coque sphérique en gaufrette constituée de deux demi-coques hémisphériques collées l'une à autre par le contact entre leurs fourrages respectifs;

— une station de démoulage (16) située en aval de la station d'assemblage (15) le long de la ligne de fabrication (10), la station de démoulage (16) comprenant un dispositif élévateur (16a) qui élève légèrement chaque deuxième demi-moule (12) par rapport au premier demi-moule (11) situé en dessous, ce qui fait que les produits de confiserie sont tirés vers le haut par les deuxièmes demi-moules (12) en raison de l'ajustement forcé des demi-coques supérieures dans les cavités (12a) correspondantes des deuxièmes demi-moules (12), et un dispositif éjecteur (16b) qui exerce une poussée sur la surface extérieure des demi-coques supérieures de façon à éjecter ces demi-coques des cavités (12a) des deuxièmes demi-moules (12), ce qui fait que les produits de confiserie tombent dans les cavités correspondantes (11a) des premiers demi-moules (11);

— une station de découplage (17), située en aval de la station de démoulage (16) le long de la ligne de fabrication (10), où chaque deuxième demi-moule (12) est retourné et ramené à la position contiguë au premier demi-moule correspondant (11), et

— une station de déchargement (18), intercalée entre la station de découplage (17) et l'extrémité sortie (10b) de la ligne de fabrication (10) où le produit de confiserie est enlevé de sa cavité (11a) du premier demi-moule (11).

4. Machine selon la revendication 3, caractérisée en ce que les premiers et les deuxièmes demi-moules (11, 12) sont chacun constitués d'une plaque ayant une épaisseur inférieur au rayon des demi-coques, et que chacune des cavités (11a, 12a) est constituée d'une ouverture formée dans ladite plaque et ayant une surface latérale qui définit un segment sphérique ayant son centre dans la face de la plaque qui regarde vers le haut quand les deux demi-moules (11, 12) sont contigus l'un à l'autre, les surfaces internes des cavités (12a) des deuxièmes demi-moules (12) comprenant en outre des zones annulaires (12b) contiguës à la surface de la plaque dans laquelle se trouve le centre du segment sphérique et ayant en section transversale un profil qui converge vers l'axe central de symétrie du segment sphérique pour former une embouchure réduite.

5. Machine selon la revendication 3, caractérisée en ce que la zone annulaire (12b) a un profil conique.

6. Machine selon l'une quelconque des revendications 3 à 5, caractérisée en ce qu'elle comprend

—une première paire d'éléments de serrage à fourches (19), avec deux bras, situés en opposition l'une à l'autre, trnasversalement par rapport à la ligne de fabrication (10);

— un moyen (21, 25, 26) pour déplacer axialement les éléments de serrage (19) l'un vers l'autre à partir d'une position de repos jusqu'à une position dans laquelle ils saisissent et placent le premier demi-moule (11) d'une paire de demi-moules situés à la station d'assemblage (15);

—une deuxième paire d'éléments de serrage à fourches (20) avec deux bras, situés en opposition l'un par rapport à l'autre, transversalement par rapport à la ligne de fabrication (10);

— un moyen (23, 25, 26) pour déplacer axialement les éléments de serrage l'un vers l'autre à partir d'une position de repos jusqu'à une position dans laquelle ils saisissent et placent le deuxième demi-moule (12) de ladite paire de demi-moules, et

— un moyen (22, 23, 27, 28, 29) pour faire tourner les éléments de serrage à fourches (23) de la deuxième paire, le deuxième demi-moule (12) étant saisi entre eux, autour d'un axe passant entre les deux paires d'éléments de serrage à fourches (19, 20), pour mettre le deuxième demi-moule (12) dans une position dans laquelle il est retourné sur le premier demi-moule (11).

7. Machine selon la revendication 6, caractérisée en ce que chaque premier demi-moule (11) et chaque deuxième demi-moule (12) se présente sous la forme d'une plaque rectangulaire ayant une gorge (11b, 12c) dans sa surface latérale à chaque coin, le fond de chaque gorge étant constitué d'une surface inclinée, les surfaces inclinées des gorges (11b, 12c) de chaque paire de coins de la plaque étant en regard d'un élément de serrage à fourches (19, 20) convergeant vers un élément à fourches correspondant (19, 20) et pouvant être saisie par les deux bras de cet éléments (19, 20) pour réaliser le positionnement correct du demi-moule (11, 12) dans la position de saisie des paires respectives d'éléments de serrage (19, 20).

0 083 324

FIG. 1

FIG. 2

FIG. 3

FIG. 4

FIG. 5

FIG. 6

1

FIG 10

FIG 7

FIG. 8

FIG. 9

FIG.12

FIG. 13

FIG. 11